# EUROPÄISCHE PATENTANMELDUNG

(11) **EP 2 648 231 A2**
(43) Veröffentlichungstag der Anmeldung: **09.10.2013**
(21) Anmeldenummer: 13161393.7
(22) Anmeldetag: 27.03.2013
(51) Int. Cl.: H01L 31/042, F24J 2/52, F24J 2/46

(54) **Montagesystem zum Aufstellen von Photovoltaik-Modulen in einer Ost-West-Ausrichtung**

(30) Priorität: 02.04.2012 DE 102012007060
(71) Anmelder: Creotecc GmbH, 79111 Freiburg (DE)
(72) Erfinder: Johner, Fabian, 79235 Vogtsburg (DE); Walz, Leo, 79117 Freiburg (DE); Bartmann, Ulrich, 76661 Philippsburg (DE)
(74) Vertreter: Witte, Weller & Partner

(57) **Zusammenfassung**

Montagesystem (10) zum Aufstellen von satteldachförmig angeordneten Photovoltaik-(PV-)Modulen (12) auf einem Gebäudedach (14), insbesondere einem Flachdach, in einer Ost-West-Ausrichtung, wobei das System (10) aufweist: mindestens zwei sich in einer Längsrichtung (X) erstreckende Grundschienen (16), wobei jede der Grundschienen (16) einen Abstand (A1) in einer Querrichtung (Y) zu einer nächsten der Grundschienen (16) aufweist; mindestens zwei sich entlang der Querrichtung (Y) erstreckende Tragschienen (18), an denen die PV-Module (12) befestigbar sind, wobei jede der Tragschienen (18) einen Abstand (A2) in der Längsrichtung (X) zu einer nächsten der Tragschienen (18) aufweist; eine Vielzahl von Sockeln (24), wobei jeder der Sockel (24) mit einer oder zwei der Tragschienen (18) in der Querrichtung (Y) verbindbar ist und wobei jeder der Sockel (24) werkzeuglos durch Einstecken in eine der Grundschienen (16) mit dieser Grundschiene (16) verbindbar ist, um diese Grundschiene (16) mit der oder den Tragschienen (18) zu verbinden; und eine Vielzahl von Klammern (26), wobei jede der Klammern (26) werkzeuglos auf eine der Grundschienen (16) entlang der Höhenrichtung (Z) steckbar ist, um den einen der Sockel (24), der in der einen der Grundschienen (16) steckt, in dieser Grundschienen (16) dauerhaft zu fixieren.

## Beschreibung

Die vorliegende Erfindung betrifft ein Montagesystem zum Aufstellen von satteldachförmig angeordneten Photovoltaik-(PV-)Modulen auf einem Gebäudedach, insbesondere einem Flachdach, in einer Ost-West-Ausrichtung.

Montagesysteme zum Aufstellen von PV-Modulen in einer Ost-West-Ausrichtung werden beispielsweise in der DE 20 2010 017 294 U1 und der DE 100 47 400 A1 beschrieben. Vorteile, die mit einer Ost-West-Ausrichtung gegenüber einer sonst üblichen Südausrichtung verbunden sind, werden in den genannten Dokumenten ausführlich erläutert.

Zwar sind die dort beschriebenen Montagesysteme modular aufgebaut. Die Systeme umfassen aber jeweils eine große Anzahl verschiedener Komponenten. Außerdem ist zum Zusammenbau der beschriebenen Montagesysteme der Einsatz von Werkzeug erforderlich.

Das Dokument DE 20 2011 000 928 U1 offenbart ein Montagesystem, insbesondere zur Ausrichtung und/oder Lagesicherung von plattenförmigen Gebilden auf Flachdächern, mit mindestens zwei aus einem U-Profil gebildeten Grundleisten und mindestens zwei Stützleisten, das dadurch gekennzeichnet ist, dass die Stützleisten aus einem Nordschenkel und einem Südschenkel gebildet sind und an mindestens einem, vorzugsweise an beiden ihrer freien Enden ein Rastglied aufweisen, das in mindestens eine in den Grundleisten ausgebildete Rastaufnahme einführbar ist.

Das Dokument DE 10 2008 052 662 A1 offenbart ein Montagesystem zur Anordnung photovoltaischer Elemente, insbesondere auf einem Hausdach mit geringer Neigung oder Flachdach, wobei das Montagesystem Schienenelemente und Modulstützelemente umfasst, an welchen das photovoltaische Element mittels Befestigungselementen befestigt ist. Ein Schienenelement, das auf einer Aufstellfläche des Hausdaches aufliegt, ist als linear verlaufendes Bodenschienenprofil ausgebildet, welches mittels elastischen Rastelementen mit den Modulstützelementen verbunden ist.

Es ist daher eine Aufgabe der vorliegenden Erfindung, ein modulares Montagesystem mit möglichst wenig verschiedenen Komponenten bereitzustellen, welche werkzeuglos zusammengebaut werden können.

Diese Aufgabe wird durch ein Montagesystem zum Aufstellen von satteldachförmig angeordneten Photovoltaik-(PV-)Modulen auf einem Gebäudedach, insbesondere einem Flachdach, in einer Ost-West-Ausrichtung gelöst, wobei das System aufweist: mindestens zwei sich in einer Längsrichtung erstreckende Grundschienen, wobei jede der Grundschienen einen Abstand in einer Querrichtung zu einer nächsten der Grundschienen aufweist; mindestens zwei sich entlang der Querrichtung erstreckende Tragschienen, an denen die PV-Module befestigbar sind, wobei jede der Tragschienen einen Abstand in der Längsrichtung zu einer nächsten der Tragschienen aufweist; eine Vielzahl von Sockeln, wobei jeder der Sockel mit einer oder zwei der Tragschienen in der Querrichtung verbindbar ist und wobei jeder der Sockel werkzeuglos durch Einstecken in eine der Grundschienen mit dieser Grundschiene verbindbar ist, um diese Grundschiene mit der oder den Tragschienen zu verbinden; und eine Vielzahl von Klammern, wobei jede der Klammern werkzeuglos auf eine der Grundschienen entlang der Höhenrichtung steckbar ist, um den einen der Sockel, der in der einen der Grundschienen steckt, in dieser Grundschienen dauerhaft zu fixieren.

Unter dem Begriff "werkzeuglos" wird nachfolgend ein Zusammenbauen des Systems der Erfindung ohne Einsatz von Werkzeugen verstanden. Der Monteur arbeitet mit seinen bloßen Händen. Unter einer "dauerhaften Fixierung" ist nachfolgend ein Zusammenbau zu verstehen, der sich nicht selbsttätig lösen kann. Die Tragschienen werden mit den Sockeln verbunden. Die Sockel werden formschlüssig in die Grundschienen eingesteckt. Die eingesteckten Sockel werden durch Aufstecken von Klammern in den Grundschienen gesichert. Sowohl die Montage als auch die Demontage kann mit Händen und Füssen erfolgen. Die Klammern lassen sich mit bloßen Händen auch wieder entfernen.

Vorzugsweise weist jede der Grundschienen eine Aufnahmenut auf, die erste und zweite Seitenwände aufweist, wobei zumindest eine der Seitenwände flexibel ist, wobei die Seitenwände im Wesentlichen parallel zueinander orientiert sind und wobei die Seitenwände elastisch auseinanderbiegbar sind, um Raum zum Einführen von einem oder mehreren der Sockel entlang einer Höhenrichtung in die Aufnahmenut zu schaffen.

Die Seitenwände lassen sich elastisch auseinander biegen. Das Auseinanderbiegen kann manuell erfolgen. Auf diese Weise wird der Platz geschaffen, der zum Einstecken der Sockel in die Aufnahmenuten erforderlich ist. Sobald die Sockel eingesteckt sind, kann man die Seitenwände loslassen, so dass sich die Seitenwände entspannen und in ihre ursprüngliche Ausgangslage zurückkehren. Die Sockel sitzen dann sicher in der Aufnahmenut. Auch für diesen Vorgang wird kein Werkzeug benötigt.

Bei einer besonderen Ausgestaltung weist jede Tragschiene einen ersten Schenkel und einen zweiten Schenkel auf, wobei jeder der Schenkel ein freies Ende und ein Firstende aufweist, wobei der erste und zweite Schenkel an den Firstenden miteinander verbunden sind und einen Firstwinkel β zwischen sich einschließen.

Die Tragschiene kann ein- oder mehrteilig ausgebildet sein. Die Tragschiene ist eine modulare Komponente des Systems der Erfindung. Die Schenkel der Tragschiene sind justierbar, um beliebige Firstwinkel zu definieren. Der Firstwinkel ist eine Funktion der Anstellwinkel, die üblicherweise gleich groß sind. Die Anstellwinkel definieren die Neigung der PV-Module gegenüber dem Dach. Bei einem Flachdach sind diese Winkel relativ zur Horizontalen definiert.

Weiter ist es von Vorteil, wenn jeder der Sockel mindestens einen Verbindungsabschnitt und einen Einsteckabschnitt aufweist, wobei der Einsteckabschnitt im zusammengebauten Zustand des Systems formschlüssig in einer der Grundschienen sitzt.

Über die Einsteckabschnitte werden die Sockel an die Grundschienen gekoppelt. Mit dem oder den Verbindungsabschnitten lassen sich die Sockel an die Tragschienen koppeln. Die Verbindung zwischen dem Einsteckabschnitt und der Grundschiene erfolgt durch einen Formschluss.

Bei einer weiteren besonderen Ausgestaltung ist der Einsteckabschnitt angepasst, in der Längsrichtung verschieblich zu sein und formschlüssig zwischen den Seitenwänden der Aufnahmenut zu sitzen.

Die eingesteckten Sockel lassen sich also in der Längsrichtung verschieben, um so die Abstände zwischen benachbarten Tragschienen, die wiederum an die Verbindungsabschnitte der Sockel koppeln, leicht und ohne Werkzeug einstellen zu können.

Ferner ist es von Vorteil, wenn jeder der Verbindungsabschnitte einen frei kragenden Verbindungsarm aufweist, der mit dem Dach einen Anstellwinkel einschließt, der dem Anstellwinkel der PV-Module entspricht.

Der Anstellwinkel der Verbindungsarme definiert also den Anstellwinkel der PV-Module. Der Monteur verbindet die Sockel einfach mit den Tragschienen. Der Anstellwinkel der PV-Module stellt sich auf diese Weise selbsttätig ein. Ein Messen und Justieren der Verbindungsarme relativ zu einer Bezugsebene (wie z.B. der Horizontalen) ist nicht mehr erforderlich.

Vorzugsweise weist jede der Klammern einen Deckel, einen ersten Flügelabschnitt und einen zweiten Flügelabschnitt auf, wobei die Flügelabschnitte über den Deckel miteinander verbunden sind und wobei mindestens einer der Flügelabschnitte flexibel ausgebildet ist.

Die Klammern werden eingesetzt, um die Seitenwände der Grundschienen gegen ein Aufbiegen zu sichern. Wenn die Grundschienen gegen ein Aufbiegen gesichert sind, können eingesteckte Sockel nicht mehr aus den Grundschienen entfernt werden. Da die Grundschienen mit eingesteckten Sockeln bereits relativ verwindungssteif sind, ist es erforderlich, dass die Klammern flexibel, das heißt insbesondere elastisch biegbar, ausgebildet sind. Die Klammern werden ebenfalls werkzeuglos auf die Grundschienen aufgesteckt. Das Aufbiegen der Klammern erfolgt von Hand. Die Klammern können, wenn sie auf die Grundschiene aufgesteckt sind, in der Längsrichtung verschoben werden, um eine Relativposition der Klammern zu den Sockeln einzustellen.

Insbesondere ist jede der Klammern angepasst, formschlüssig auf einer der Grundschienen aufgesteckt zu werden, um so die Seitenwände der Aufnahmenut gegen ein Aufbiegen nach außen zu versteifen.

Weiter ist es von Vorteil, wenn jede der Grundschienen im Querschnitt U-förmig ausgebildet ist und einen Boden aufweist, wobei die Seitenwände über dem Boden derart miteinander verbunden sind, dass die Seitenwände nach außen auseinanderbiegbar sind.

Die Grundschienen sind in einer Ebene senkrecht zur Längsrichtung, das heißt im Querschnitt, U-förmig ausgebildet. Die U-förmige Ausbildung definiert die Aufnahmenut, in welche die Sockel eingesteckt werden. Eine H-Form definiert eine doppelte U-Form, die entlang der Böden miteinander verbunden sind. Die Seitenwände können federnd um den Boden herum bewegt werden.

Ferner ist es von Vorteil, wenn der erste Schenkel und der zweite Schenkel einstückig ausgebildet sind.

Die einstückige Ausbildung erleichtert die Herstellung, den Transport und die Montage.

In einer weiteren besonderen Ausgestaltung weisen die Grundschienen, die Sockel und die Klammern jeweils mindestens eine Formschlussnase auf, deren Konturen zumindest abschnittsweise deckungsgleich sind.

Die Grundschienen, die Sockel und die Klammern werden formschlüssig miteinander verbunden. Eine Sicherung dieser Komponenten durch einen Kraftschluss ist nicht erforderlich. Die formschlüssige Verbindung ermöglicht den werkzeuglosen Zusammenbau des Systems.

Vorzugsweise spannen die Längsrichtung, die Querrichtung und die Höhenrichtung ein kartesisches Koordinatensystem auf.

In einer weiteren vorteilhaften Ausgestaltung erstrecken sich die Grundschienen nur in der Längsrichtung und die Tragschienen nur entlang der Querrichtung, wenn das System zusammengebaut ist.

Das System kommt mit so wenigen wie möglichen Komponenten aus. Die zwei Tragschienen und die zwei Grundschienen bilden in der Draufsicht ein Rechteck, welches durch eine Befestigung der PV-Module endgültig verwindungssteif wird.

Bei einer weiteren besonderen Ausführungsform sind die Klammern, wenn das System zusammengebaut ist, jeweils mit einem Abstand in der Längsrichtung benachbart zu den eingesteckten Sockeln aufgesteckt, so dass die eingesteckten Sockel unlösbar mit den Grundschienen verbunden sind.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ausführungsbeispiele der Erfindung sind in der Zeichnung dargestellt und werden in der nachfolgenden Beschreibung näher erläutert. Es zeigen:
- Fig. 1: eine Seitenansicht (Fig. 1A) und eine Draufsicht (Fig. 1b) eines Montagesystems gemäß der Erfindung;
- Fig. 2: eine perspektivische Ansicht (Fig. 2A) einer Grundschiene und eine Schnittansicht (Fig. 2B) der Grundschiene der Fig. 1 sowie Schnittansichten (Fig. 2C und Fig. 2D) exemplarisch abgewandelter Grundschienen;
- Fig. 3: eine perspektivische Ansicht (Fig. 3A), eine Draufsicht (Fig. 3B), eine Vorderansicht (Fig. 3C) und eine Seitenansicht (Fig. 3D) eines Sockels der Fig. 1;
- Fig. 4: eine perspektivische Ansicht (Fig. 4A) und eine Vorderansicht (Fig. 4B) einer Klammer der Fig. 1;
- Fig. 5: eine Vorderansicht (Fig. 5A), eine Vergrößerung (Fig. 5B) der Fig. 5A, eine Draufsicht auf eine Abwicklung (Fig. 5C), eine Vergrößerung (Fig. 5D) der Fig. 5C in abgewinkelter Form, eine Vergrößerung (Fig. 5E) in gefalzter Form der Fig. 5C, eine perspektivische Seitenansicht (Fig. 5F) und eine Schnittansicht (Fig. 5G) einer Tragschiene der Fig. 1; und
- Fig. 6: eine Verbindungsstelle mit der Grundschiene der Fig. 2, dem Sockel der Fig. 3 und der Klammer der Fig. 4 in einer Vorderansicht (Fig. 6A), einer Draufsicht (Fig. 6B) und einer perspektivischen Ansicht (Fig. 6C).

In der nachfolgenden Beschreibung der Erfindung werden gleiche Teile und Merkmale mit gleichen Bezugszeichen versehen, wobei die in der gesamten Beschreibung enthaltenen Offenbarungen sinngemäß auf gleiche Teile und Merkmale mit gleichen Bezugszahlen übertragen werden können. Lageangaben, wie z.B. "oben", "unten", "seitlich" etc. sind auf die unmittelbar beschriebene Figur bezogen und bei einer Lageänderung sinngemäß auf die neue Lage zu übertragen.

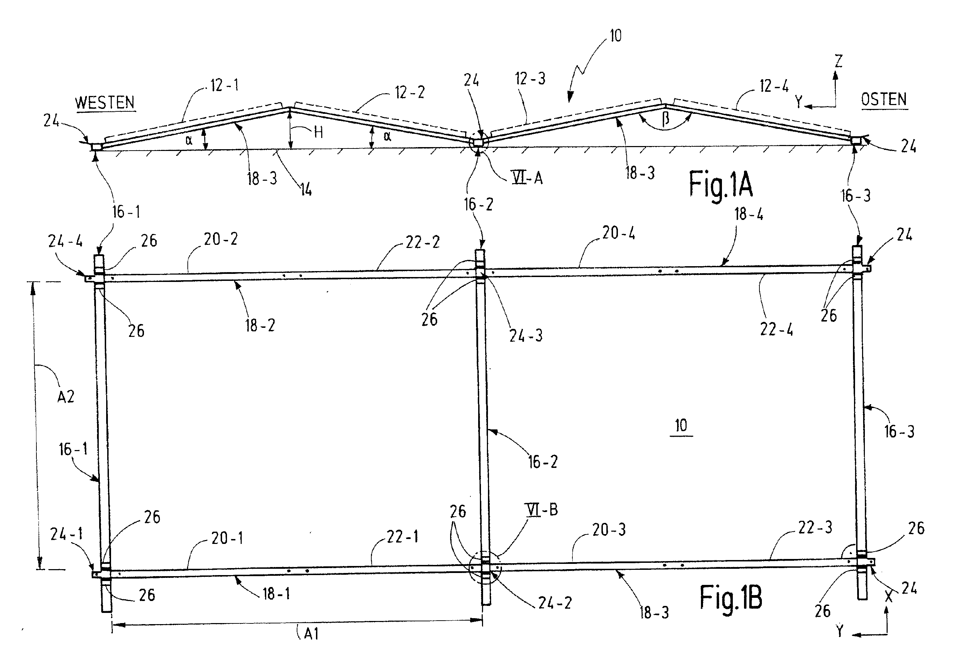

Ferner ist zu beachten, dass Richtungsangaben und Orientierungen zugrunde gelegt werden, wobei eine Längsrichtung mit "X", eine Querrichtung mit "Y" und eine Höhenrichtung mit "Z" bezeichnet werden. Beispielsweise kann Fig. 1 ein damit korrespondierendes (kartesisches) Koordinatensystem X, Y, Z entnommen werden.

Fig. 1 zeigt eine Vorderansicht (Fig. 1A) und eine Draufsicht (Fig. 1 B) eines Montagesystems bzw. Systems 10 gemäß der vorliegenden Erfindung. Mit dem System 10 der Erfindung können Photovoltaik-(PV-)Module 12, die mit Strichlinien angedeutet sind, in einer so genannten Ost-West-Ausrichtung auf einem Dach 14, insbesondere einem Flachdach, eines Gebäudes aufgestellt werden. Die PV-Module 12 werden normalerweise paarweise satteldachförmig mit einem Anstellwinkel α relativ zum Dach 14 und einem so genannten Firstwinkel β zwischen den PV-Modulen 12 aufgestellt. Die PV-Module 12-1 und 12-2 sowie die PV-Module 12-3 und 12-4 bilden jeweils ein derartiges Paar. In der Fig. 1 ist in diesem Sinne ein Montagesystem 10 für zwei satteldachförmige PV-Modulpaare gezeigt.

Das System 10 weist Grundschienen 16, Tragschienen 18, Sockel 24 und Klammern 26 auf. Unter einer "Schiene" wird nachfolgend ein gerades, längliches und festes Profil jeder Art zum Führen oder Stabilisieren verstanden. Die Schienen 16 und 18 können z.B. mittels Strangpressverfahren, Rollformen, Profilwalzen und/oder Falzen, etc. hergestellt werden. Die Schienen 16 und 18, die Sockel 24 und die Klammern 26 sind vorzugsweise aus Metall. In einem zusammengebauten Zustand des Systems 10, der in Fig. 1 gezeigt ist, erstrecken sich die Grundschienen 16 in der Längsrichtung X und die Tragschienen 18 erstrecken sich entlang der Quer- und Höhenrichtung YZ. Die Grundschienen 16 und die Tragschienen 18 sind in der Draufsicht der Fig. 1B im Wesentlichen senkrecht zueinander orientiert. "Im Wesentlichen senkrecht" bedeutet, dass kleinere Winkelabweichungen, z.B. aufgrund von Montageungenauigkeiten oder Herstellungsungenauigkeiten, zulässig sind.

In der Fig. 1 sind drei Grundschienen 16-1 bis 16-3 gezeigt, die parallel und jeweils mit einem Abstand A1 in der Querrichtung Y zueinander angeordnet sind. Die Tragschienen 18-1 und 18-2 erstrecken sich ebenfalls parallel zueinander und weisen einen Abstand A2 in der Längsrichtung X zueinander auf. Die Tragschienen 18 erheben sich um eine Höhe H in der Höhenrichtung Z gegenüber dem Dach 14 in ihrem Scheitelpunkt, der durch den Firstwinkel β definiert ist. Die Tragschienen 18 weisen jeweils einen ersten Schenkel 20 und einen zweiten Schenkel 22 auf, die den Firstwinkel β zwischen sich einschließen.

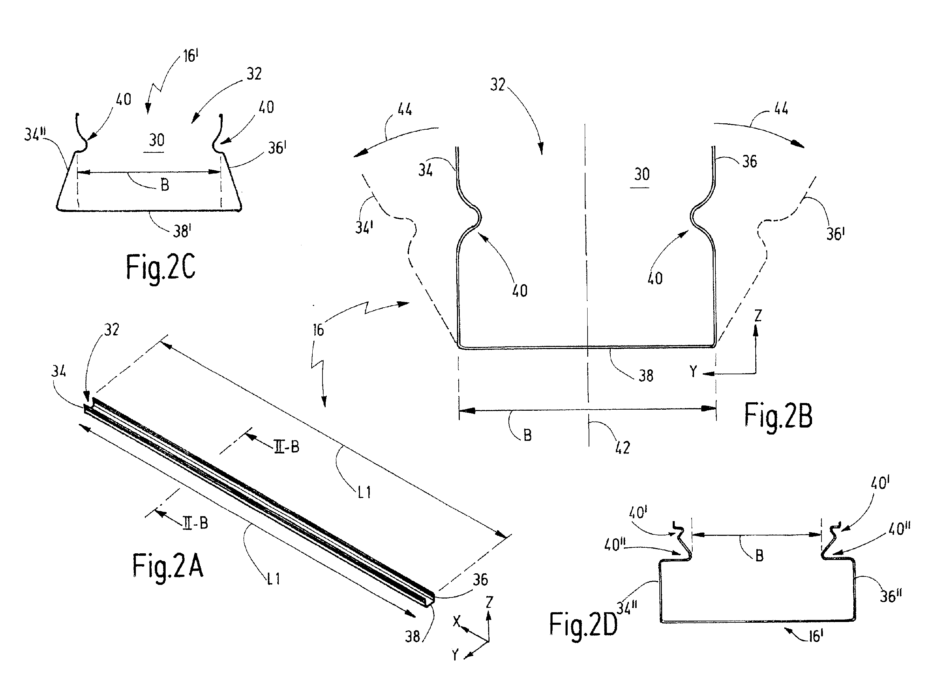

Die Tragschienen 18 sind mit den Sockeln 24 verbunden, indem sie z.B. miteinander verschraubt werden oder ineinander gesteckt werden, wie es nachfolgend noch näher ausgeführt werden wird. Die Sockel 24 werden entlang der Höhenrichtung Z in die Grundschienen 12 gesteckt. Die Grundschienen 12 weisen dazu Aufnahmenuten 32 auf, wie sie unter Bezugnahme auf Fig. 2 noch näher erläutert werden. Sobald die Sockel 24 (formschlüssig) in die Grundschienen 12 eingesteckt sind, werden die Grundschienen 12 mittels der Klammern 26 gesichert, indem die Klammern 26 auf die Grundschienen 12 gesteckt werden. Die Klammern 26 werden vorzugsweise in unmittelbarer Nähe, das heißt mit einem kleinen Abstand in der Längsrichtung X relativ zu den Sockeln 34, auf die Grundschienen 12 gesteckt. Vorzugsweise werden zwei Klammern 26 um jeden Sockel 24 gesteckt, nämlich eine erste Klammer 26 vor bzw. links von dem Sockel und eine zweite Klammer 26 nach bzw. rechts von dem Sockel 24, so dass der eingesteckte Sockel 24 von den Klammern 26 umgeben ist. Je nach Ausführung der Grundschiene 12 kann es ausreichen, auch nur eine einzige Klammer 26 auf die Grundschiene 12 aufzustecken, in welcher der Sockel 24 platziert ist. Die Klammern 26 unterbinden ein (elastisches) Aufbiegen (öffnen) der Grundschienen 12 und sichern so die formschlüssig in den Grundschienen 12 aufgenommenen Sockel 24. Die Klammern 26 sind vorzugsweise aus Federstahl gefertigt. Sobald die Klammer 26 generell eine, wenn auch nur geringe, Elastizität aufweist, erfolgt die Verbindung mit der Grundschiene 16 nicht nur formschlüssig, sondern auch kraftschlüssig. Der Kraftschluss verhindert, dass sich die Sockel 24 in der Längsrichtung der Grundschiene 16 verstellen können, d.h. ihre relative Position ändern können, indem die Klammer 26 einen Anschlag für den Sockel 24 bildet. Die Klammern 26 werden vorzugsweise außerhalb positioniert, um zu verhindern, dass die Sockel 24 in der Längsrichtung der Grundschiene 16 gegenüber einer gewünschten Lage verrutschen. Die Aufnahmenut 32 kann innen, d.h. zwischen zwei Sockeln 24, die dem gleichen PV-Modul zugeordnet sind, mittels einer (nicht gezeigten) Abdeckung gegen Umwelteinflüsse (Schmutz, Wasser, etc) geschützt werden. Die Abdeckung wird auf die Aufnahmenut 32 aufgesteckt wie eine der Klammer 26, ist jedoch länger. Die Abdeckung dient auch als Trittschutz, damit der Monteur die Schiene 16 nicht beschädigt. Außerdem kann eine so verdeckte Grundschiene 16 auch als Kabelkanal für die Stromleitung des PV-Moduls 12 genutzt werden.

Eine "kleinste Einheit" des Montagesystems 10 besteht aus zwei Grundschienen 16 (z.B. 16-1 und 16-2) und zwei Tragschienen 18 (z.B. 18-1 und 18-2), die über vier Sockel 24 (z.B. 24-1 bis 24-4) miteinander verbunden sind. Je nach Ausführung der Grundschiene 16 werden ein oder mehrere Klammern 26 vorgesehen. Üblicherweise werden pro Sockel 24 zwei Klammern 26 (links und rechts davon) vorgesehen. In der Fig. 1 sind zwei "kleinste Einheiten" des Systems 10 gezeigt, die sich die mittlere Grundschiene 16-2 teilen.

Jede der "kleinsten Einheiten" des Systems 10 kann spiegelsymmetrisch zu einer imaginären Linie ausgebildet sein, die sich zwischen in der Längsrichtung X gegenüber liegenden Firstwinkeln β aufspannt.

Die Fig. 2 zeigt eine Grundschiene 16 der Fig. 1 in einer perspektivischen Ansicht (Fig. 2A) und einer Schnittansicht (Fig. 2B) entlang der Linie II-B- II-B der Fig. 2A.

Jede der Grundschienen 16 weist eine in der Längsrichtung X verlaufende Aufnahmenut 32 auf, die in einem Inneren 30 der jeweiligen Grundschiene 16 vorgesehen ist. Da alle Grundschienen 16 Komponenten eines Baukastensystems sind, wird nachfolgend exemplarisch nur auf eine Grundschiene 16 Bezug genommen, wobei alle Angaben für diese Grundschiene 16 analog für alle anderen Grundschienen 16 gelten. Die Grundschiene 16 weist eine erste Seitenwand 34 und eine zweite Seitenwand 36 auf, die im Wesentlichen parallel zueinander orientiert sind. "Im Wesentlichen parallel" bedeutet, dass die Seitenwände 34 und 36 auch kleinere Winkel miteinander einschließen können, die durch Herstellungstoleranzen bedingt oder absichtlich ausgebildet (vgl. Fig. 2C) sein können. Im Idealzustand schließen die Seitenwände 34 und 36 keinen Winkel miteinander ein. Die Seitenwände 34 und 36 sind über einen Boden 38 miteinander verbunden, der Boden 38 schließt mit den Seitenwänden 34 und 36 vorzugsweise jeweils einen rechten Winkel ein. Die Aufnahmenut 32 ist in der Fig. 2 in Form eines einseitig nach oben offenen, U-förmigen Kanals gezeigt. Es versteht sich, dass die Grundschiene 16 auch andere Querschnittsformen (z.B. H-Form, etc.) aufweisen kann.

Die Seitenwände 34 und 36 weisen jeweils eine Formschlussnase 40 auf, die in der Schnittansicht der Fig. 2B nach innen gerichtet sind, das heißt konkav sind. Die Formschlussnasen 40 entsprechen Nuten in den Außenflächen der Seitenwände 34 und 36 in der Fig. 2A, die sich im Wesentlichen in der Längsrichtung X erstrecken.

Die Seitenwände 34 und 36 bzw. deren Innenflächen weisen im Wesentlichen einen Abstand B in der Querrichtung Y zueinander auf, wenn man von den Formschlussnasen 40 absieht. Die Grundschiene 16 kann spiegelsymmetrisch zu einer Mittelebene 42 ausgebildet sein, die parallel zu einer XZ-Ebene orientiert ist. Die Formschlussnasen 40 der ersten Seitenwand 34 und der zweiten Seitenwand 36 sind vorzugsweise auf gleicher Höhe angeordnet. Es versteht sich, dass die Form (Kontur) und die relative Anordnung der Formschlussnasen 40 für die Seitenwände 34 und 36 unterschiedlich sein kann. Die Formschlussnasen 40 können z.B. in unterschiedlichen Höhen angeordnet sein. Die Formschlussnasen 40 könnten unterschiedlich gewölbt (konkav, konvex, Kombinationen aus konkav und konvex, etc.) ausgebildet sein. Je höher aber der Grad der Symmetrie des gesamten Systems 10 ist, desto einfacher lassen sich die Komponenten (Grundschiene 16, Tragschiene 18, Sockel 24 und Klammern 26) am Montageort, das heißt, in der Regel auf dem Dach 14, zusammenbauen.

Die Seitenwände 34 und 36 sind jeweils so ausgebildet, dass sie flexibel, das heißt elastisch biegbar, sind. Die Seitenwände 34 und 36 können auseinander gebogen werden, das heißt, die Seitenwände 34 und 36 können voneinander wegbewegt werden, wie es durch Pfeile 44 angedeutet ist. Dann befinden sich die Seitenwände 34 und 36 in den Positionen, die in der Fig. 2B durch Strichlinien 34' und 36' gezeigt sind. Es versteht sich, dass auch nur eine der beiden Wände 34 und 36 flexibel ausgebildet sein kann, so dass dann die andere Seitenwand 36 bzw. 34 starr ist. Die Flexibilität der Seitenwand bzw. Seitenwände 34 und 36 gewährleistet, dass ausreichend Raum zur Verfügung steht, um einen der Sockel 24 in die Aufnahmenut 32 entlang der Höhenrichtung Z einführen zu können. Dies kann bspw. dadurch erreicht werden, dass ein Monteur eine oder beide Seitenwände 34 und/oder 36 per Hand nach außen biegt und anschließend den Sockel 24 von oben in die Nut 32 einführt. Alternativ wird der Sockel 24 einfach nur von oben in die Aufnahmenut 32 gepresst, ohne zuvor eine der Seitenwände 34 oder 36 aufzubiegen. Dann kann er die Seitenwand bzw. Seitenwände 34 und 36 loslassen, so dass sich diese selbsttätig in ihre ursprüngliche Position zurückbewegen, die in der Fig. 2B mit einer durchgezogenen Linie gezeigt ist.

In Fig. 2C ist eine abgewandelte Grundschiene 16' gezeigt, deren Querschnitt gegenüber dem Querschnitt der Fig. 2B abgewandelt ist. Die Seitenwände 34" und 36" bilden mit dem Boden 38', der etwas breiter als der Boden 38 in Fig. 2B ist, und mit der Öffnung der Aufnahmenut 32 einen trapezförmigen Querschnitt, weil die Seitenwände unterhalb der identisch ausgebildeten Formschlussnasen 40, auseinander laufen. Die Seitenwände 34" und 36" werden aber ebenfalls als im Wesentlichen parallel betrachtet.

Selbstverständlich können auch mehrere Formschlussnasen 40 pro Seitenwand vorgesehen werden, wie es exemplarisch in der Schnittansicht der Fig. 2D gezeigt ist. Eine obere Formschlussnase 40' kann z.B. für eine formschlüssige Verbindung mit den Klammer 26 und eine untere Formschlussnase 40" kann für eine formschlüssige Verbindung mit den Sockeln 24 vorgesehen sein. Die Konturen dieser Formschlussnasen 40' und 40" können sich unterscheiden.

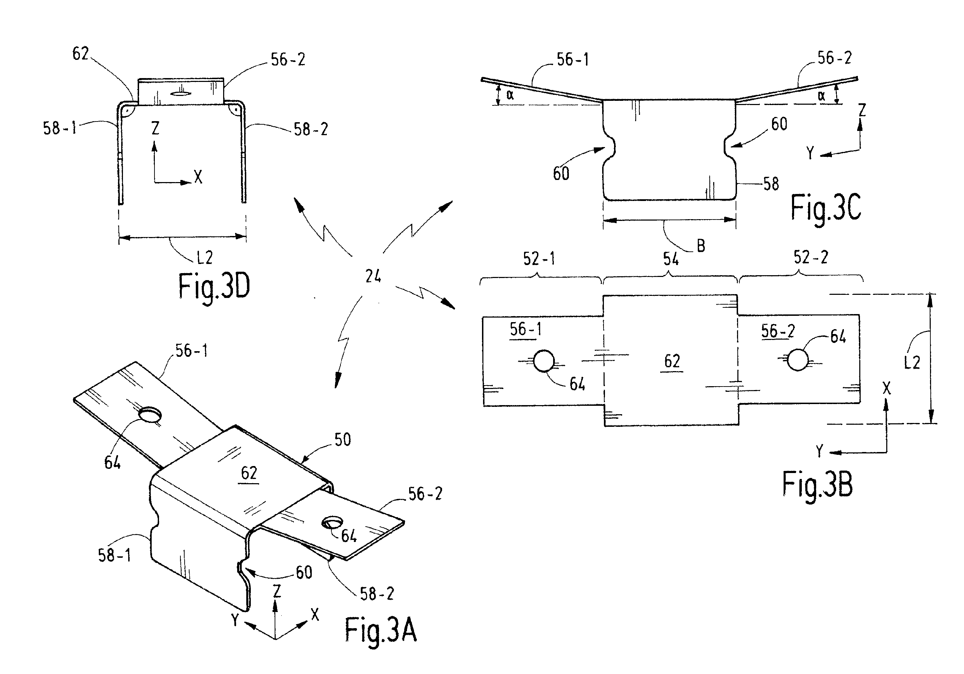

Die Fig. 3 zeigt exemplarisch einen der Sockel 24 der Fig. 1 in einer perspektivischen Ansicht (Fig. 3A), einer Draufsicht (Fig. 3B), einer Vorderansicht (Fig. 3C) und einer Seitenansicht (Fig. 3D). Der Sockel 24 wird nachfolgend unter gleichzeitiger Bezugnahme auf alle vier Ansichten der Fig. 3 beschrieben werden.

Der Sockel weist einen, vorzugsweise einstückig ausgebildeten, Körper 50 auf. Der Körper 50 weist in der Querrichtung Y einen ersten Verbindungsabschnitt 52-1, einen mittig dazwischen angeordneten Einsteckabschnitt 54 und einen zweiten (optionalen) Verbindungsabschnitt 52-2 auf (vgl. Draufsicht der Fig. 3B). In der Fig. 3B sind die Verbindungsabschnitte 52 und der Einsteckabschnitt 54 imaginär jeweils durch eine Strichlinie voneinander getrennt gezeigt. Die Verbindungsabschnitte 52 können in Form von Verbindungsarmen 56 ausgebildet sein. Die Verbindungsarme 56 schließen in dem Zustand gemäß der Fig. 1 den Anstellwinkel α mit einer Horizontalen ein (vgl. Fig. 3C).

Der Einsteckabschnitt 54 kann ein erstes Federelement 58-1, ein zweites Federelement 58-2 sowie einen dazwischen angeordneten Deckel 62 aufweisen (Fig. 3A und 3D). Die Federelemente 58 und der Deckel 62 haben vorzugsweise einen U-förmigen Querschnitt (vgl. Fig. 3D). Die Federelemente 58-1 und 58-2 erstrecken sich vorzugsweise in parallelen Ebenen, definieren mit dem Deckel 62 jeweils vorzugsweise einen rechten Winkel und haben ebenfalls die Breite B.

Die Federelemente 58-1 und 58-2 weisen eine oder mehrere Formschlussnasen 60 auf, deren Kontur bzw. Konturen an die Konturen der Formschlussnasen 40 der Grundschienen 16, vorzugsweise deckungsgleich, angepasst sind. Die relativen Lagen der Formschlussnasen 60 entsprechen den relativen Lagen der Formschlussnasen 40 in den Grundschienen 16. Gleiches gilt für die Konturen. Die Federelemente 58 können mit den Grundschienen 16 bzw. den Aufnahmenuten 32 so genannte Feder-Nut-Verbindungen bilden.

Die Verbindungsarme 56 können eine oder mehrere Öffnungen 64 aufweisen, um die Tragschienen 18 beispielsweise mittels einer Schraubverbindung mit den Sockeln 24 zu verbinden, indem dann eine (gewindeschneidende) Schraube (nicht gezeigt) in die Öffnung 64 eingedreht wird. Der Verbindungsarm 56 kann aber auch in Form einer Zunge, vorzugsweise formschlüssig, in eine entsprechende Tasche (nicht gezeigt) der Tragschiene 18 eingeführt werden, um so eine formschlüssige Steckverbindung zu bilden.

Es versteht sich, dass bei jedem Sockel 24 ein oder mehrere Federelemente 58 vorgesehen sein können. Die in der Fig. 3 gezeigte Ausführung hat sich aber als besonders formstabil erwiesen. Je mehr Federelemente 58 pro Sockel 24 vorgesehen sind, desto verwindungssteifer wird die Grundschiene 16, sobald der entsprechende Sockel 24 in die Grundschiene 16 eingesteckt ist.

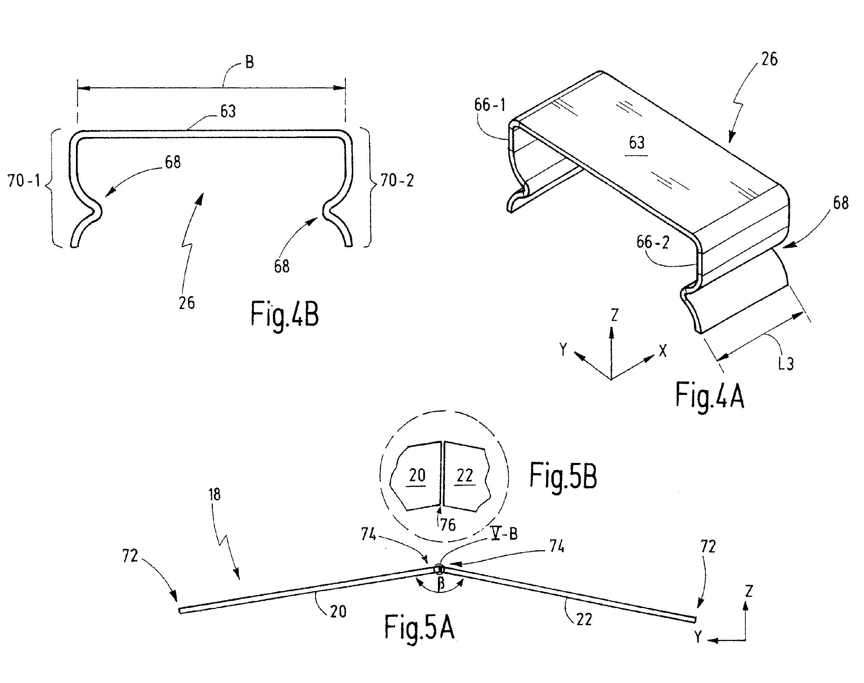

Fig. 4 zeigt eine Klammer 26 der Fig. 1. Fig. 4A zeigt eine perspektivische Ansicht und Fig. 4B zeigt eine Vorderansicht der Klammer 26.

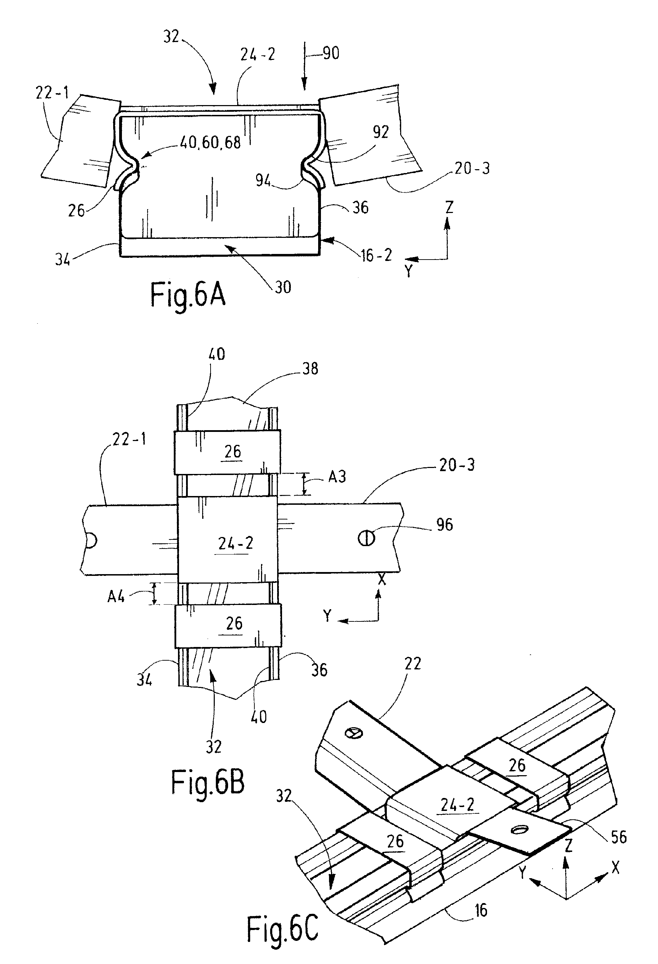

Die Klammer 26 weist hier eine erste Seitenwand 66-1 und eine zweite Seitenwand 66-2 auf, die zwischen sich einen Deckel 63 aufweisen. Der Deckel 63 und die Seitenwände 66 schließen vorzugsweise jeweils einen im Wesentlichen senkrechten Winkel ein. Die Seitenwände 66 sind im Wesentlichen parallel zueinander orientiert, wenn man von den Formschlussnasen 68 absieht. Die Formschlussnasen 68 sind hinsichtlich ihrer Kontur und ihrer relativen Lage an die Formschlussnasen 40 und 60 der Grundschiene 16 bzw. des Sockels 24 angepasst. Die Seitenwände 66 sind um die Breite B voneinander beabstandet und definieren so genannte Flügelabschnitte 70-1 und 70-2 der Klammer 26. Zumindest eine der Seitenwände 66 ist derart flexibel ausgebildet, dass die Klammer 26 (von oben) auf die Aufnahmenut 32 der Grundschiene 16 aufgesteckt werden kann. Die Klammer bzw. Klammern 26 verhindern im aufgesteckten Zustand, dass die Seitenwände 34 und 36 der Grundschiene 16 nach außen gebogen werden können. Wenn ein Sockel 24 in die Grundschiene eingesteckt ist, lässt sich der Sockel 24 dann nicht mehr aus der Grundschiene 16 lösen, sobald eine oder mehrere der Klammern 26 ausreichend nah (in der Längsrichtung X) am eingesteckten Sockel 24 positioniert ist bzw. sind. Dies wird noch näher unter Bezugnahme auf Fig. 6 erläutert werden.

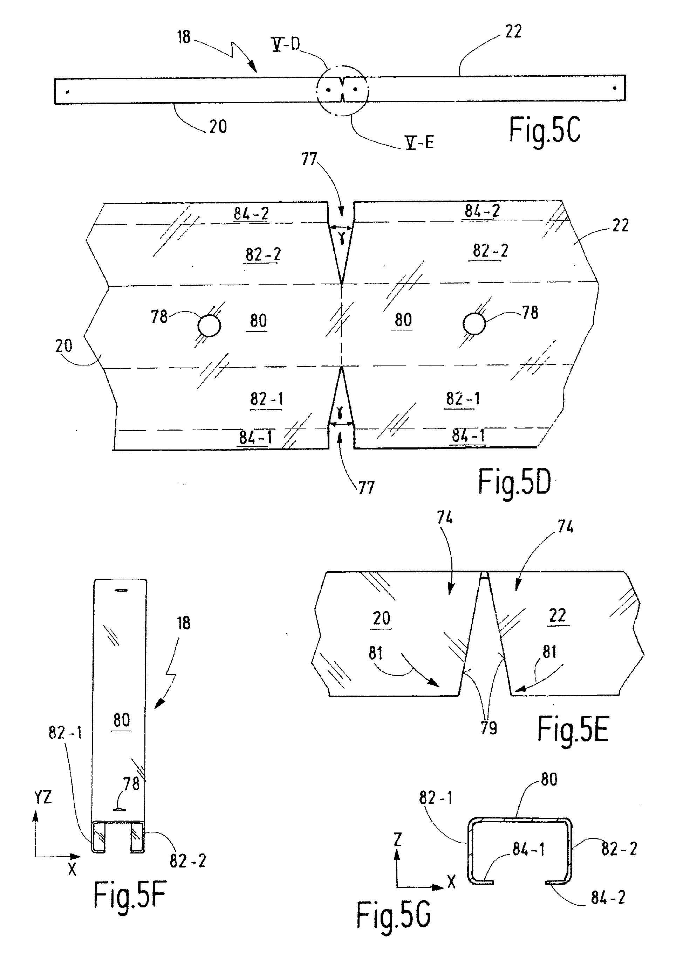

Unter Bezugnahme auf Fig. 5 wird ein Aufbau einer Tragschiene 18 der Fig. 1 näher erläutert werden. Fig. 5A zeigt eine Vorderansicht einer Tragschiene 18. Fig. 5B zeigt eine Vergrößerung des Kreises V-B der Fig. 5A.

Der erste Schenkel 20 und der zweite Schenkel 22 der Tragschiene 18 weisen jeweils ein freies Ende 72 auf, wo die Tragschiene 18 über die Sockel 24 mit den Grundschienen 16 verbunden wird. Die Enden der Schenkel 20 und 22 im Bereich des Firstwinkels β sind mit 74 bezeichnet. Wie in Fig. 5 gezeigt, berühren sich die Firstenden 74 nahezu nicht und können einen (optionalen) Spalt 76 zwischen sich definieren. Der erste Schenkel 20 und der zweite Schenkel 22 sind aber vorzugsweise einstückig miteinander verbunden, wie es nachfolgend noch erläutert werden wird.

Fig. 5C zeigt eine Draufsicht auf die abgewickelte Tragschiene 18 der Fig. 5A. In Fig. 5D ist einer Vergrößerung des Kreises V-E der Fig. 5C gezeigt. Die Tragschiene 18 weist in dem Bereich, wo die Firstenden 74 aneinander grenzen, keilförmige Einschnitte 77 auf. Der Öffnungswinkel γ der keilförmigen Einschnitte 77 ist so gewählt, dass der erste Schenkel 20 und der zweite Schenkel 22 so aufeinander zugebogen werden können, dass sich der Firstwinkel β zwischen den Schenkeln 20 und 22 ausbildet, sobald die Schenkel 20 und 22 aneinander stoßen. In der Fig. 5C, das heißt im abgewickelten Zustand der Tragschiene 18, beträgt der Firstwinkel β 180° (Transportstellung). Die Einschnitte 77 ermöglichen es, die Tragschiene 18 bis zum Montageort (Dach) als gerade Schiene (β=180°) zu transportieren und erst auf der Baustelle, vorzugsweise per Hand, zu biegen, um den Firstwinkel β (β<180°) auszubilden. Dies vereinfacht den Transport. Die Biegung erfolgt um die in der Fig. 5B vertikal gezeichnete Strichlinie.

Die Tragschiene 18 weist einen Deckel 80, Seitenwände 82 sowie einen (optionalen) Kragen 84 auf. Ferner können im Deckel 80 Öffnungen 78 vorgesehen sein, die mit den Öffnungen 64 in den Verbindungsarmen 56 der Sockel 24 korrespondieren, wenn die Sockel 24 und die Tragschienen 18 über Schraubverbindungen miteinander verbunden werden sollen. Die horizontalen Strichlinien in der Fig. 5D zeigen die Falzkanten, um den in der Fig. 5G gezeigten Querschnitt der Tragschiene 18 zu erhalten.

Fig. 5E zeigt die Tragschiene 18 in einer Transportstellung. In der Transportstellung ist die Tragschiene 18 bereits gefalzt, soweit der Deckel 80, die Seitenwände 82 und der Kragen 84 betroffen sind. Allein der Knick (Firstwinkel) zwischen dem ersten Schenkel 20 und dem zweiten Schenkel 22 fehlt. Um die Tragschiene 18 aus ihrer Transportstellung in eine Montagestellung zu bekommen, werden die Stirnseiten 79 der Firstenden 74 der Schenkel 20 und 22 aufeinander zu bewegt, bis sie aneinander stoßen, wie es in der Fig. 5E in Form von Pfeilen 81 angedeutet ist. Die Schenkel 20 und 22 werden dabei dauerhaft verformt. Die Montagestellung der Tragschiene 18 ist gut in Fig. 1A zu erkennen.

Bezug nehmend auf Fig. 6 wird nachfolgend eine Verbindung der Tragschienen 18 mit den Grundschienen 16 erläutert werden. Fig. 6A zeigt eine Vorderansicht der miteinander verbundenen Komponenten 16, 18, 24 und 26, wobei die Fig. 6A eine Vergrößerung des Kreises VI-A der Fig. 1A darstellt. Fig. 6B zeigt eine Draufsicht der Fig. 6A, wobei eine Vergrößerung des Kreises VI-B der Fig. 1B gezeigt ist. Fig. 6C zeigt eine perspektivische Ansicht der Verbindung der Figuren 6A und 6B, wobei der rechte Schenkel 20 aus Gründen der Übersichtlichkeit weggelassen ist. Die formschlüssige Verbindung der Komponenten wird nachfolgend unter gemeinsamer Bezugnahme auf alle Ansichten der Figuren 1 und 6 erläutert werden.

Fig. 6A zeigt eine Vergrößerung des Kreises VI-A der Fig. 1A. Man blickt in der Längsrichtung X auf die Verbindung der Tragschienen 18-1 und 18-3 mit der Grundschiene 16-2 (vgl. Fig. 1 in der Mitte), die über den Sockel 24 erfolgt. Der Sockel 24 sitzt im Inneren 30 der Grundschiene 16-2, das heißt in der Aufnahmenut 32 der Grundschiene 16-2. Zu diesem Zweck wurde der Sockel 24 zuvor vertikal (siehe Pfeil 90) zwischen die Seitenwänden 34 und 36 in die Aufnahmenut 32 eingeführt. Der Sockel 24 kann in der Z-Richtung etwas weniger hoch sein als die Aufnahmenut 32 tief ist. Es versteht sich, dass die Höhe des Sockels 24 aber auch genau so groß wie die Tiefe der Aufnahmenut 32 sein kann. Eine etwas geringere Höhe des Sockels 24 stellt ein ausreichendes Spiel in der Höhenrichtung Z zum Justieren bzw. Positionieren der Formschlussnasen 60 des Sockels 24 relativ zu den Formschlussnasen 40 der Seitenwände 34 und 36 sicher.

Konturen 92 der Formschlussnasen 40 und 68 der Grundschiene 16 und der Klammer 26 sind vorzugsweise exakt identisch, wohingegen eine Kontur 94 der Formschlussnase 60 des Sockels 24 auch leicht von der exakten Identität (Deckungsgleichheit) abweichen kann, indem zwischen einer ansteigenden und absteigenden Flanke der Formschlussnase 60 ein gerader Abschnitt in der Höhenrichtung Z vorgesehen ist, um ein ausreichendes Spiel in der Höhenrichtung Z während des Einsteckens (vgl. Pfeil 90) bereitzustellen. Die Konturen 92 und 94 sind hinsichtlich ihrer jeweiligen ansteigenden und absteigenden Flanken gleich geformt. Die Kontur 94 weist optional einen zusätzlichen geradlinigen Abschnitt in der Höhenrichtung Z auf. Es versteht sich, dass die relativen Lagen der Formschlussnasen 40, 60 und 68 aufeinander abgestimmt sind. Wie bereits zuvor erwähnt, können die Formschlussnasen 40, 60 und 68 auf der linken und rechten Seite auch in unterschiedlichen Höhen angeordnet sein. Eine symmetrische Ausbildung ist jedoch bevorzugt.

Der Sockel 24 ist mit den Tragschienen 18-1 und 18-3 bzw. deren Schenkeln 22-1 (links) und 20-3 (rechts) verbunden. In der Fig. 6 sind die Tragschienen 18 über Schraubverbindungen miteinander verbunden. In der Fig. 6B ist eine exemplarische Schraube 96 gezeigt. Es versteht sich, dass die Tragschienen 18 auch auf andere Weise mit den Sockeln 24 verbunden werden können, wie z.B. durch Nieten, formschlüssiges Zusammenstecken oder Ähnliches. Im Falle eines formschlüssigen Zusammensteckens sind die freien Enden 72 der Schenkel 20 und 22 mit Aufnahmetaschen (hier nicht dargestellt) ausgebildet, die die Verbindungsarme 56 des Sockels 24 in der Querrichtung Y aufnehmen. Eine kraftschlüssige Verbindung, wie z.B. die in der Fig. 6B gezeigte Schraubverbindung, ist dann nicht erforderlich. Eine formschlüssige Steckverbindung zwischen dem Sockel 24 und den Tragschienen 18 reicht aus, um dem System 10 eine erforderliche Stabilität zu geben, die spätestens dann erreicht wird, wenn die PV-Module 12 auf den Tragschienen 18 befestigt sind (vgl. Fig. 1A). Die PV-Module 12 machen das System 10 trotz seiner Leichtbauweise verwindungssteif.

Sobald die Sockel 24 in die Grundschienen 16 eingesteckt sind, können die Sockel 24 mittels der Klammern 26 in den Grundschienen 16 gesichert werden. Die Klammern 26 werden dann, vorzugsweise in unmittelbarer Nähe, benachbart zu den Sockeln 24 auf die Grundschiene 16 aufgesteckt. Das Aufstecken der Klammern 26 auf die Grundschienen 16 erfolgt wiederum in vertikaler Richtung (vgl. Pfeil 90 in Fig. 6A). Die Klammern 26 sind derart flexibel, das heißt elastisch biegsam, ausgebildet, dass die Flügelabschnitte 70 (vgl. Fig. 4B) problemlos über die Seitenwände 34 und 36 der Grundschiene 16 gestülpt werden können. Die Seitenwände 34 und 36 lassen sich aufgrund des eingesteckten Sockels 24 nicht weiter nach innen bewegen als es in der Fig. 6A gezeigt ist. Die abfallenden bzw. auslaufenden Flanken der Konturen 92 der Formschlussnasen 68 der Klammern 26 unterstützen den Monteur beim Aufstecken der Klammern 26 auf die Grundschienen 16. Die auslaufenden Flanken sind so geformt, dass der Monteur sie gut mit seinen Fingerkuppen hintergreifen kann, um die Klammer 26 aufzubiegen. Beim Aufbiegen werden die Flügelabschnitte 70 voneinander weg bewegt. Sobald die Klammer 26 über die Grundschiene 16 bzw. die entsprechende Aufnahmenut 32 gestülpt ist, kann der Monteur die Klammer 26 loslassen. Die Klammer 26 entspannt sich dann und bewegt sich in die in der Fig. 6A gezeigte Stellung. In der Fig. 6A greift die Klammer 26 mit ihren Formschlussnasen 68 von außen in die Formschlussnasen 40 der Grundschiene 16 ein, die wiederum von außen in die Formschlussnasen 68 des Sockels 24 eingreifen. Selbstverständlich kann die Klammer 26 auch locker auf die Grundschiene 16 aufgelegt werden und anschließend unter einer höheren Druckkraft nach unten gedrückt werden, indem sich z.B. der Monteur auf die Klammer 26 stellt.

Die Klammern 26 verhindern, dass die Seitenwände 34 und 36 der Grundschiene 16 nach außen gebogen werden können. Auf diese Weise sind die Sockel 24 in den Grundschienen 16 gesichert. Auf diese Weise sind auch die Tragschienen 18 gegenüber den Grundschienen 16 gesichert, selbst wenn die Tragschienen 18 nicht kraftschlüssig, sondern lediglich formschlüssig mit den Sockeln 24 verbunden sind, wie es oben bereits erläutert wurde.

In der Draufsicht der Fig. 6B ist gezeigt, dass zwei Klammern 26 in der Längsrichtung X um den Sockel 24 herum positioniert sind. Die obere Klammer 26 weist in der Längsrichtung X einen Abstand A3 zum Sockel 24 auf. Die untere Klammer 26 weist in der Längsrichtung X einen Abstand A4 relativ zum Sockel 24 auf. Die Abstände A3 und A4 können gleich groß sein. Die Abstände A3 und A4 können unterschiedlich sein. Die Abstände A3 und A4 sind so zu wählen, dass die Seitenwände 34 und 36 der Grundschiene 16 im Bereich des eingesteckten Sockels 24 nicht mehr nach außen gebogen werden können. Vorzugsweise werden die Klammern 26 relativ nah zum eingesteckten Sockel 24 positioniert. Die Klammern 26 können im aufgesteckten Zustand in der Längsrichtung X auf der Schiene 16 verschoben werden.

Die Grundschienen 16 weisen in der Längsrichtung X eine Länge L1 auf (Fig. 2A). Die Sockel 24 weisen in der Längsrichtung X eine Länge L2 auf (Fig. 3D). Die Klammern 26 weisen in der Längsrichtung X eine Länge L3 auf (Fig. 4A). Die Länge L1 (z.B. 200 cm) der Grundschiene 16 ist sehr viel größer als die Längen L2 und L3 der Sockel 24 und der Klammern 26. Die Längen L2 und L3 können annähernd gleich sein. Üblicherweise ist die Länge L2 der Sockel 24 leicht größer (z.B. 4 cm) als die Länge L3 (z.B. 2 bis 3 cm) der Klammern 26. Die Abstände A3 und A4 liegen üblicherweise in einer Größenordnung von 1 bis 2 cm.

Es versteht sich, dass die eingesteckten Sockel 24 auch nur durch eine Klammer 26 in den Grundschienen 16 gesichert werden können. In diesem Fall kann die Länge L3 der Klammern 26 eine Rolle spielen. So ist es z.B. möglich, dass auf der ersten Grundschiene 16-1 der Fig. 1B lediglich eine einzige Klammer 26, vorzugsweise mittig, zwischen den Sockeln 24-1 und 24-4 positioniert ist. Diese Klammer 26 würde dann eine etwas größere Länge L3 aufweisen, um die Seitenwände 34 und 36 der ersten Grundschiene 16-1 zu versteifen, das heißt, gegen ein auseinanderbiegen (vgl. Fig. 2B) zu sichern.

Ein großer Vorteil des Systems 10 der Erfindung ist, dass das System 10, und insbesondere die Grundschienen 16 und die Kombination aus Sockeln 24 und Tragschienen 18, "werkzeuglos" zusammengebaut werden können. Der Monteur kann die Sockel 24 mit den Tragschienen 18 auf der Baustelle verbinden (z.B. zusammenstecken oder verschrauben). Die mit den Tragschienen 18 verbundenen Sockel 24 können in die Grundschienen 16 (vertikal) eingesteckt werden. Die Grundschienen 16 können zuvor auf dem Dach 14 befestigt und ausgerichtet worden sein. Anschließend werden eine oder mehrere Klammern 26 um die eingesteckten Sockel 24 herum auf die Grundschienen 16 aufgesteckt. Diese Vorgänge können vom Monteur von Hand erledigt werden, ohne dass der Monteur dazu Werkzeug benötigen würde, es sei denn, die Sockel 24 werden mit den Tragschienen 18 verschraubt. Die Verschraubung der Sockel 24 mit den Tragschienen 18 kann aber bereits vor der Anlieferung auf die Baustelle erfolgen, so dass auch in diesem Fall ein "werkzeugloser" Zusammenbau des Systems 10 auf dem Dach 14 möglich ist. Die Komponenten 16, 18, 24 und 26 des Systems 10 werden dann einfach ineinander gesteckt.

Ein weiterer Vorteil des Systems 10 im zusammengebauten Zustand ist darin zu sehen, dass die mit den Sockeln 24 verbundenen Tragschienen 18 trotz aufgesteckter Klammern 26 weiterhin in der Längsrichtung X verschieblich sind. Erst eine Befestigung der PV-Module 12 an den Tragschienen 18 legt eine endgültige relative Position der Tragschienen 18 bzw. der Sockel 24 zueinander fest. Diese Längsverschieblichkeit vereinfacht eine Befestigung der PV-Module 12 zusätzlich. Das System 10 zeichnet sich also durch eine hohe Montage- bzw. Justagefreundlichkeit aus.

Das System 10 kann auch auf einfache Weise demontiert werden, indem die Klammern 26 von den Grundschienen 16 gelöst werden.

Das System 10 ist beliebig skalierbar. Die Längen L1 der Grundschienen 16 kann frei gewählt werden. Eine Anzahl der Tragschienen 18 in Reihe, das heißt in der Querrichtung Y, kann frei gewählt werden. Auf diese Weise können beliebig viele PV-Module 12 miteinander in einer Ost-West-Ausrichtung kombiniert werden.

Das System 10 ist baukastenartig aufgebaut und kann an jede Größe (Dimension) eines PV-Moduls 12 angepasst werden. Die Anstellwinkel α lassen sich durch unterschiedlich ausgebildete Tragschienen 18 ändern.

## Patentansprüche

1. Montagesystem (10) zum Aufstellen von satteldachförmig angeordneten Photovoltaik-(PV-)Modulen (12) auf einem Gebäudedach (14), insbesondere einem Flachdach, in einer Ost-West-Ausrichtung, wobei das System (10) aufweist:
mindestens zwei sich in einer Längsrichtung (X) erstreckende Grundschienen (16), wobei jede der Grundschienen (16) einen Abstand (A1) in einer Querrichtung (Y) zu einer nächsten der Grundschienen (16) aufweist;
mindestens zwei sich entlang der Querrichtung (Y) erstreckende Tragschienen (18), an denen die PV-Module (12) befestigbar sind, wobei jede der Tragschienen (18) einen Abstand (A2) in der Längsrichtung (X) zu einer nächsten der Tragschienen (18) aufweist;
eine Vielzahl von Sockeln (24), wobei jeder der Sockel (24) mit einer oder zwei der Tragschienen (18) in der Querrichtung (Y) verbindbar ist und wobei jeder der Sockel (24) werkzeuglos durch Einstecken in eine der Grundschienen (16) mit dieser Grundschiene (16) verbindbar ist, um diese Grundschiene (16) mit der oder den Tragschienen (18) zu verbinden; und
eine Vielzahl von Klammern (26), wobei jede der Klammern (26) werkzeuglos auf eine der Grundschienen (16) entlang der Höhenrichtung (Z) steckbar ist, um den einen der Sockel (24), der in der einen der Grundschienen (16) steckt, in dieser Grundschienen (16) dauerhaft zu fixieren.

2. Montagesystem nach Anspruch 1, wobei jede der Grundschienen (16) eine Aufnahmenut (32) aufweist, die erste und zweite Seitenwände (34, 36) aufweist, wobei zumindest eine der Seitenwände (34, 36) flexibel ist, wobei die Seitenwände (34, 36) im Wesentlichen parallel zueinander orientiert sind und wobei die Seitenwände (34, 36) elastisch auseinander biegbar (44) sind, um Raum zum, vorzugsweise vertikalen, Einführen von einem oder mehreren der Sockel (24) in die Aufnahmenut (32) zu schaffen.

3. Montagesystem nach Anspruch 1 oder 2, wobei jede Tragschiene (18) einen ersten Schenkel (20) und einen zweiten Schenkel (22) aufweist, wobei jeder der Schenkel (20, 22) ein freies Ende (72) und ein Firstende (74) aufweist, wobei der erste und zweite Schenkel (20, 22) an den Firstenden (74) miteinander verbunden sind und einen Firstwinkel (Beta) zwischen sich einschließen.

4. Montagesystem nach einem der Ansprüche 1 bis 3, wobei jeder der Sockel (24) mindestens einen Verbindungsabschnitt (52) und einen Einsteckabschnitt (54) aufweist, wobei der Einsteckabschnitt (56) im zusammengebauten Zustand des Systems (10) formschlüssig in einer der Grundschienen (16) sitzt.

5. Montagesystem nach den Ansprüchen 2 und 4, wobei der Einsteckabschnitt (54) angepasst ist, in der Längsrichtung (X) verschieblich und formschlüssig zwischen den Seitenwänden (34, 36) der Aufnahmenut (32) zu sitzen.

6. System nach Anspruch 4, wobei jeder der Verbindungsabschnitte (52) einen frei kragenden Verbindungsarm (56) aufweist, der mit dem Dach einen Anstellwinkel (alpha) einschließt, der einem Anstellwinkel (alpha) der PV-Module entspricht.

7. Montagesystem nach einem der Ansprüche 1 bis 6, wobei jede der Klammern (26) einen Deckel (62), einen ersten Flügelabschnitt (70-1) und einen zweiten Flügelabschnitt (70-2) aufweist, wobei die Flügelabschnitte (70) über den Deckel (62) miteinander verbunden sind und wobei mindestens einer der Flügelabschnitte (70) flexibel ausgebildet ist.

8. Montagesystem nach Anspruch 2, wobei jede der Klammern (26) angepasst ist, formschlüssig auf eine der Grundschienen (16) gesteckt zu werden, um so die Seitenwände (34, 36) der Aufnahmenut (32) gegen ein Aufbiegen nach außen (44) zu versteifen.

9. Montagesystem nach Anspruch 2, wobei jede der Grundschienen (16) im Querschnitt U-förmig ausgebildet ist und einen Boden (38) aufweist, wobei die Seitenwände (34, 36) über den Boden (38) derart miteinander verbunden sind, dass die Seitenwände (34, 36) nach außen auseinander biegbar sind.

10. Montagesystem nach Anspruch 3, wobei der erste Schenkel (20) und der zweite Schenkel (22) einstückig ausgebildet sind.

11. Montagesystem nach einem der Ansprüche 1 bis 10, wobei die Grundschienen (16), die Sockel (24) und die Klammern (26) jeweils mindestens eine Formschlussnase (40, 60, 78) aufweisen, deren Konturen zumindest abschnittweise deckungsgleich sind.

12. Montagesystem nach einem der Ansprüche 1 bis 11, wobei die Längsrichtung (X), die Querrichtung (Y) und die Höhenrichtung (Y) ein kartesisches Koordinatensystem aufspannen.

13. Montagesystem nach einem der Ansprüche 1 bis 12, wobei sich die Grundschienen (16) nur in der Längsrichtung (X) und die Tragschienen (18) nur entlang der Querrichtung (Y) erstrecken, wenn das System (10) zusammengebaut ist.

14. Montagesystem nach einem der Ansprüche 1 bis 13, wobei die Klammern (26), wenn das System (10) zusammengebaut ist, jeweils mit einem Abstand in der Längsrichtung (X) benachbart zu den eingesteckten Sockeln (24) aufgesteckt sind, so dass die eingesteckten Sockel unlösbar mit den Grundschienen (16) verbunden sind.
